# FASCICULE DE BREVET EUROPEEN

(11) **EP 1 188 633 B1**
(45) Date de publication et mention de la délivrance du brevet: **24.08.2011**
(21) Numéro de dépôt: 01402302.2
(22) Date de dépôt: 06.09.2001
(51) Int. Cl.: B60T 8/32, B60T 7/04

(54) **Système et procédé d'analyse de freinage d'un véhicule**
System und Vorrichtung zur Analyse des Abbremsens eines Fahrzeuges
System and method for analysing the braking of a vehicle

(30) Priorité: 14.09.2000 FR 0011692
(43) Date de publication de la demande: 20.03.2002
(73) Titulaire: Renault s.a.s., 92100 Boulogne Billancourt (FR)
(72) Inventeur: Brigout, Christophe, 78730 Saint Arnoul en Yvelines (FR); Flegel, Philippe, 75014 Paris (FR); Petit-Boulanger, Claire, 78280 Guyancourt (FR); Priez, Alain, 91190 Gif sur Yvette (FR)

(56) Documents cités:
- EP-A- 0 768 224
- US-A- 5 230 549
- US-A- 5 762 407

## Description

La présente invention concerne le domaine du freinage de pièces tournantes d'un ensemble mécanique, notamment d'un véhicule automobile.

Lors d'une situation d'urgence, la réaction la plus fréquente du conducteur d'un véhicule est le freinage. Cependant, on observe fréquemment que ce freinage est insuffisant.

Différents systèmes d'aide au freinage d'urgence ont été développés. On peut citer le document DE-A-19520609 qui propose de déclencher une assistance au freinage en fonction de l'atteinte ou non d'un seuil fixe de variation de pression dans le circuit hydraulique de freinage. On connaît également le document DE-A-4427247 qui propose une assistance de freinage en cas de dépassement d'un seuil fixe de variation de l'effort de freinage appliqué par le conducteur sur la pédale de frein. L'abrégé du document japonais n° 10067317 propose une assistance au freinage d'urgence sur la base d'une détection de la vitesse de la pédale de frein qui est comparée à un seuil de référence.

Or, on s'est aperçu que les conducteurs présentent des comportements au freinage d'urgence extrêmement différents les uns des autres. Les solutions proposées jusqu'à présent peuvent s'adapter à certains conducteurs mais pas à tous.

La présente invention propose d'améliorer l'assistance au freinage d'urgence.

La présente invention propose également une aide au freinage d'urgence qui tient compte du comportement du conducteur et qui adapte sa stratégie de déclenchement à chacun.

Le système d'analyse de freinage d'un véhicule, notamment en vue de la détection de freinage d'urgence, selon un aspect de l'invention, comprend au moins un capteur d'une grandeur relative à l'action de freinage du conducteur. Le système comprend un moyen de mesure du maximum de ladite grandeur pendant une durée déterminée Δ, une mémoire apte à stocker un nombre N de mesures émises par ledit capteur, et un moyen de comparaison de la dernière mesure avec une valeur déterminée V selon la répartition des N mesures stockées en mémoire.

Avantageusement, la mémoire est de type premier entré/premier sorti.

Avantageusement, la valeur déterminée V est définie par un percentile P de la répartition des N mesures.

Dans un mode de réalisation de l'invention, le système comprend un moyen d'assistance au freinage en fonction du résultat de la comparaison de la dernière mesure avec la valeur déterminée V.

Avantageusement, ladite grandeur est la vitesse maximale d'enfoncement de la pédale de frein.

Dans un mode de réalisation de l'invention, la durée déterminée Δ est comprise entre 200 et 300 millisecondes, préférablement entre 225 et 275 millisecondes, mieux encore égale à 250 millisecondes.

Dans un mode de réalisation de l'invention, le nombre N de mesures est compris entre 20 et 70, préférablement entre 30 et 50.

Dans un mode de réalisation de l'invention, le percentile P de la répartition des N mesures est compris entre 85 et 95, préférablement entre 88 et 92, mieux encore égal à 91.

Avantageusement, ladite grandeur est le gradient maximal d'effort sur la pédale de frein.

Dans un mode de réalisation de l'invention, la durée déterminée Δ est comprise entre 150 et 250 millisecondes, préférablement entre 175 et 225 millisecondes, mieux encore égale à 200 millisecondes.

Dans un mode de réalisation de l'invention, le nombre N de mesures est compris entre 20 et 70, préférablement entre 30 et 50.

Dans un mode de réalisation de l'invention, le percentile P de la répartition des N mesures est compris entre 85 et 98, préférablement entre 91 et 96, mieux encore égal à 94,6.

Avantageusement, ladite grandeur est le gradient maximal de pression dans le circuit hydraulique de freinage.

Dans un mode de réalisation de l'invention, la durée déterminée Δ est comprise entre 150 et 250 millisecondes, préférablement entre 175 et 225 millisecondes, mieux encore égale à 200 millisecondes.

Dans un mode de réalisation de l'invention, le nombre N de mesures est compris entre 20 et 70, préférablement entre 30 et 50.

Dans un mode de réalisation de l'invention, le percentile P de la répartition des N mesures est compris entre 75 et 95, préférablement entre 80 et 90, mieux encore égal à 85,8.

De préférence, le système comprend au moins trois capteurs respectivement de la vitesse d'enfoncement de la pédale de frein, du gradient maximal d'effort sur la pédale de frein, et du gradient maximal de pression dans le circuit hydraulique de freinage. Le système peut alors tenir compte du résultat de trois comparaisons. On peut ainsi augmenter la fiabilité de l'analyse du freinage.

La présente invention sera mieux comprise à l'étude de la description détaillée de quelques modes de réalisation pris à titre d'exemples nullement limitatifs et illustrés par les dessins annexés, sur lesquels :
- la figure 1 est une vue schématique d'un système selon un premier mode de réalisation;
- la figure 2 est une courbe montrant la répartition des freinages;
- la figure 3 est une vue schématique d'un système selon un second mode de réalisation de l'invention;
- la figure 4 est une vue schématique d'un système selon un troisième mode de réalisation de l'invention; et
- la figure 5 est une vue schématique d'un système selon un quatrième mode de réalisation de l'invention.

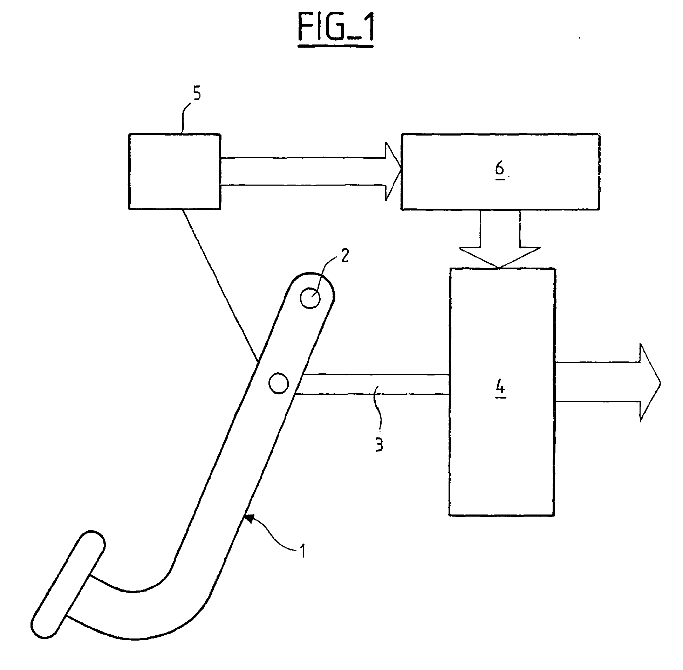

Comme on peut le voir sur la figure 1, le système de freinage comprend une pédale de frein 1 apte à pivoter autour d'un axe 2 lorsqu'elle est actionnée, par exemple par le conducteur. La pédale de frein 1 est reliée à une tige de commande 3 articulée sur la pédale 1 en un point décalé par rapport à l'axe 2 de façon que le pivotement de la pédale provoque le déplacement de la tige 3.

Le système de freinage comprend un module d'assistance 4 relié à la tige 3 ainsi qu'un circuit hydraulique de freinage, non représenté, connecté au module d'assistance 4. Le module d'assistance 4 envoie vers le circuit hydraulique une consigne sous la forme d'un signal électrique, hydraulique ou mécanique, en fonction de la position de la tige 3. Il est également prévu un capteur 5 de la vitesse de déplacement de la pédale de frein 1. Le capteur 5 pourra être de type rotatif monté sur l'axe 2, ou encore de type linéaire. On pourrait également prévoir de monter le capteur 5 sur la tige 3, de façon qu'il détecte sa vitesse de déplacement. La sortie du capteur 5 reliée à un calculateur 6 est capable d'élaborer des consignes à destination du module d'assistance 4. De façon non représentée, le calculateur 6 comprend au moins une mémoire, au moins un microprocesseur, au moins un bus de communication, au moins un programme de commande stocké en mémoire et apte à élaborer les consignes de commande lorsqu'il est exécuté par le microprocesseur, et des ports d'entrée et de sortie.

Le fonctionnement de l'analyse de freinage est le suivant. Lorsque le conducteur appuie sur la pédale de frein 1, la vitesse d'enfoncement est mesurée pendant une durée prédéterminée Δ comprise généralement entre 200 et 300 ms, préférablement entre 225 et 275 ms, par exemple égale à 250 ms. Le maximum de la vitesse d'enfoncement est enregistré dans une mémoire du calculateur 6. On conserve dans une mémoire quelques dizaines desdites valeurs maximales correspondant à des freinages passés, par exemple entre 20 et 70, préférablement entre 30 et 50. La mémoire stockant ces valeurs sera de type premier entré-premier sorti ou FIFO.

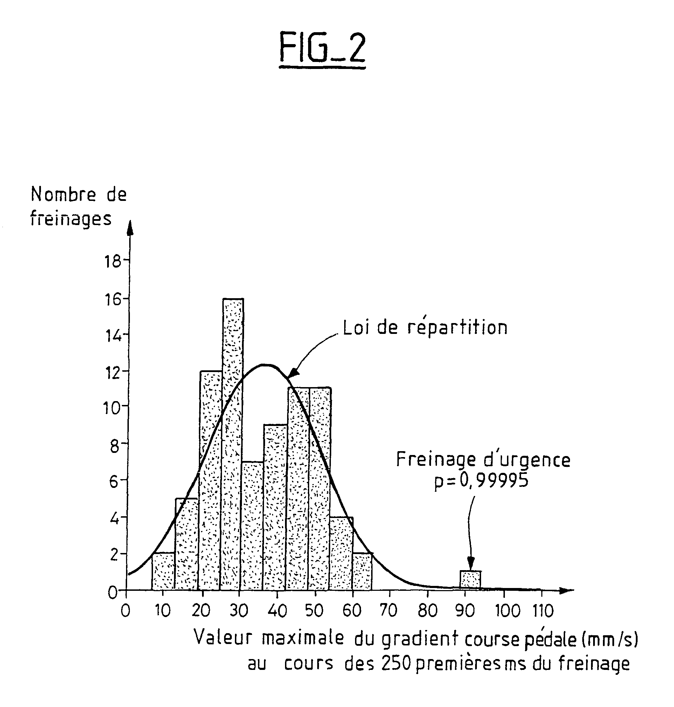

Comme on peut le voir sur la figure 2, le calculateur 6 peut alors établir la fonction de répartition du nombre de freinages d'après la valeur maximale de la vitesse de la pédale de frein au cours de la durée Δ. Le calculateur 6 établit une loi de répartition, par exemple une loi normale, et peut comparer la valeur maximale pendant la durée Δ d'un freinage en cours à l'instant considéré à une valeur de référence établie d'après un percentile de la loi de répartition précédemment calculée.

En d'autres termes, la valeur de référence qui est une vitesse, angulaire ou linéaire, est celle pour laquelle un pourcentage P des freinages, d'après la loi de répartition, est inférieur à ladite vitesse. Le pourcentage P sera généralement compris entre 85 et 95, préférablement entre 88 et 92, mieux encore égal à 91. Ainsi, lorsque la vitesse maximale d'enfoncement de la pédale de frein dépasse la valeur de référence de vitesse à laquelle 91% des valeurs maximales de vitesse de freinage enregistées sont inférieures, on estime qu'il s'agit d'un freinage d'urgence et le calculateur 6 envoie une consigne d'augmentation de l'assistance au freinage au module 4. Des essais ont montré que la totalité des freinages d'urgence sont détectés, mais qu'il subsiste un taux de fausse alarme, c'est-à-dire de freinages normaux considérés comme des freinages d'urgence, de l'ordre de 6%.

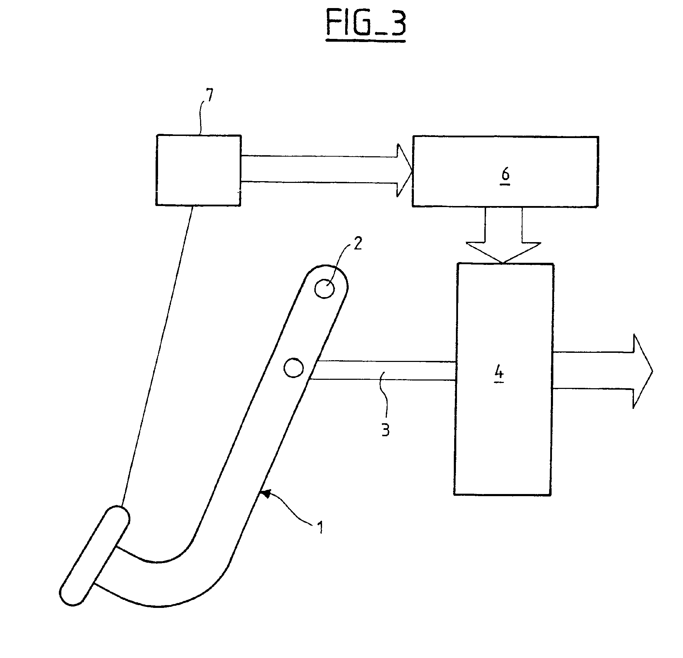

Le mode de réalisation illustré sur la figure 3 est proche de celui illustré sur la figure 1, à ceci près que le capteur de vitesse est remplacé par un capteur d'effort 7 relié à la pédale de frein 1. Toutefois, à titre de variante, on pourrait envisager de le relier à la tige 3. Le fonctionnement général est similaire, la durée Δ sera généralement comprise entre 150 et 250 ms, préférablement entre 175 et 200 ms, par exemple égale à 200 ms. Le percentile P de la répartition des mesures sera généralement compris entre 85 et 98, préférablement entre 91 et 96, par exemple égal à 94,6. Des essais ont montré que la totalité des freinages d'urgence sont détectés, mais qu'il subsiste un taux de fausse alarme, c'est-à-dire de freinages normaux considérés comme des freinages d'urgence, de l'ordre de 3%.

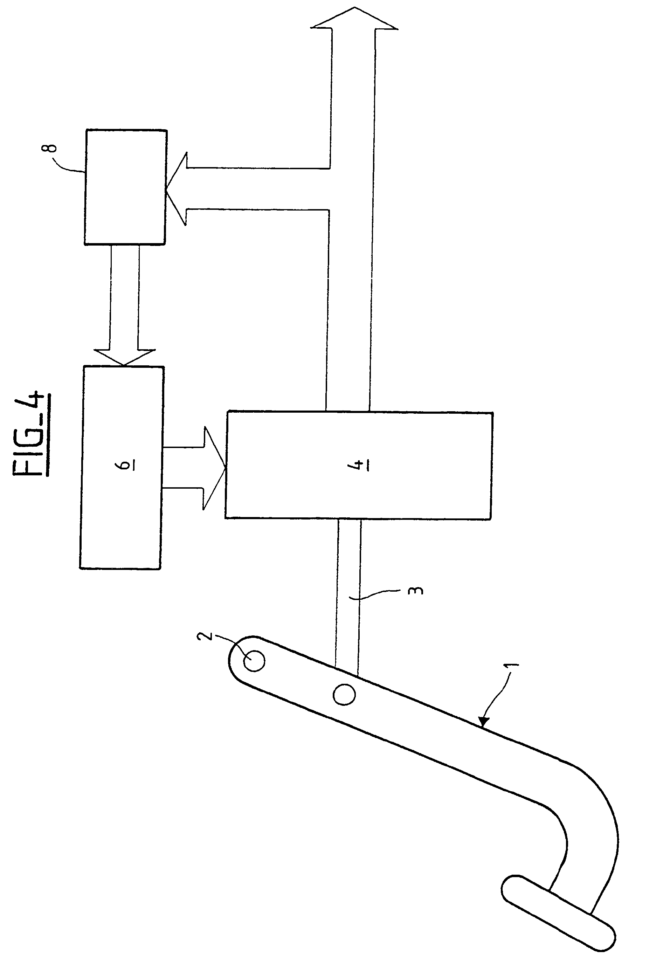

Le mode de réalisation illustré sur la figure 4 est proche de celui illustré sur la figure 1, à ceci près que le capteur de vitesse est supprimé et qu'on dispose un capteur de pression 8 sur le circuit hydraulique immédiatement en aval du module d'assistance 4. Le fonctionnement est proche de celui expliqué précédemment. La durée déterminée Δ sera généralement comprise entre 150 et 250 ms, préférablement entre 175 et 225 ms, mieux encore égale à 200 ms. Le percentile P de la répartition des mesures de pression sera généralement compris entre 75 et 95, préférablement entre 80 et 90, par exemple égal à 85,8. Des essais ont montré que l'on parvenait à détecter 100% des freinages d'urgence, mais en subissant un taux de fausse alarme de l'ordre de 15%.

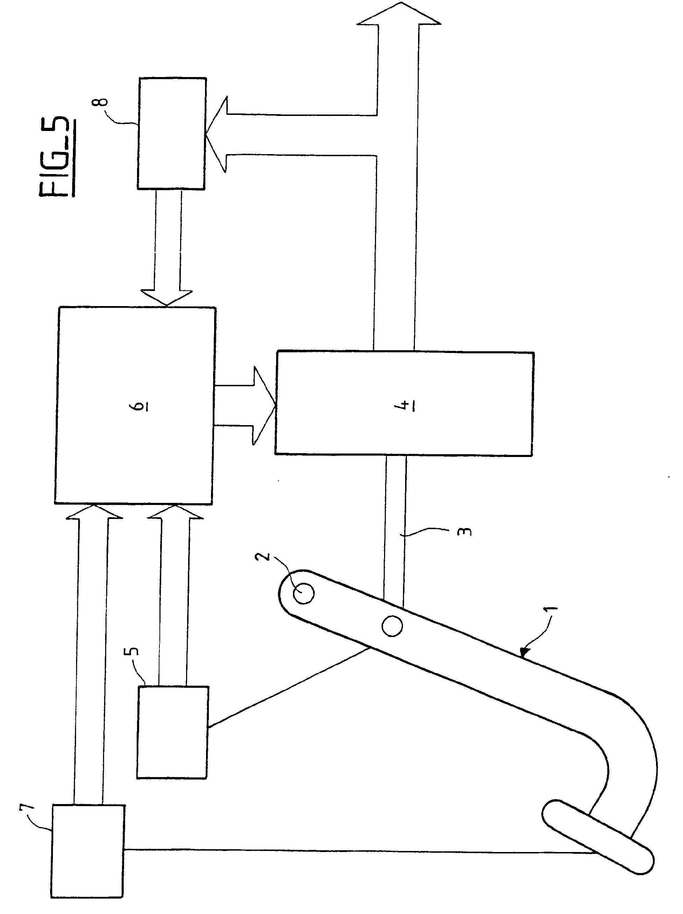

Le mode de réalisation illustré sur la figure 5 est proche des précédents. Le système comprend alors un capteur de vitesse 5 semblable à celui de la figure 1, un capteur d'effort 7 semblable à celui de la figure 3, et un capteur de pression 8 semblable à celui de la figure 4. Les capteurs 5, 7 et 8 ont chacun une sortie reliée au calculateur 6, qui reçoit alors une quantité d'informations plus importante lui permettant d'effectuer une analyse fine du freinage en cours. On peut alors combiner ces informations de diverses manières, dans le but de maintenir le taux de 100% de détection des freinages d'urgence tout en abaissant le taux de fausses alarmes.
1. On utilise la vitesse d'enfoncement de la pédale ou le gradient d'effort, mais avec des seuils plus élevés que précédemment :
   Déclenchement = f([(grad (course)>92.9^{e} percentile) U (grad(effort)<96,5^{e} percentile)])

Le taux de fausse alarme est alors estimé à 4,7%.
2. On utilise la vitesse d'enfoncement ou le gradient de pression :
   Déclenchement = f([(grad (course)>95,7^{e} percentile) (grad(pression)>97,7^{e} percentile)])

Le taux de fausse alarme est alors estimé à 2,3%.
3. On utilise le gradient d'effort ou le gradient de pression :
   Déclenchement = f([(grad (effort)>99,7^{e} percentile) (grad(pression)>97,7^{e} percentile)])

Le taux de fausse alarme est alors estimé à 1,9%.
4. On utilise la vitesse d'enfoncement ou le gradient d'effort, et le gradient de pression :
   Déclenchement = f({[(grad (course)>92,9^{e} percentile) (grad(effort)>96,5^{e} percentile)] (grad(pression)>85,8^{e} percentile)})

Le taux de fausse alarme est alors estimé à 4,3%.
5. On utilise le gradient d'effort ou le gradient de pression, et la vitesse d'enfoncement :
   Déclenchement = f({[(grad (effort)>99,7^{e} percentile) (grad(pression)>97,7^{e} percentile)] (grad(course)>91,1^{e} percentile)})

Le taux de fausse alarme est alors estimé à 1,7%.
6. On utilise la vitesse d'enfoncement ou le gradient de pression, et le gradient d'effort :
   Déclenchement = f({[(grad (course)>95,7^{e} percentile) (grad(pression)>97,7^{e} percentile)] (grad(effort)>94,6^{e} percentile)})

Le taux de fausse alarme est alors estimé à 1,4%.

On comprend donc que la prise en compte de la variation d'une grandeur plutôt que d'un seuil fixe permet une amélioration de la détection des situations de freinage d'urgence et que l'utilisation de plusieurs informations, en reliant le calculateur à la sortie de capteurs de grandeur physique de nature différente, permet un accroissement de la fiabilité de la détection avec un taux d'erreur pouvant aller de 1,9 à 4,7% en mettant en oeuvre deux capteurs, et un taux d'erreur allant de 1,4 à 4,3% en mettant en oeuvre trois capteurs.

## Revendications

1. Système d'analyse de freinage d'un véhicule, notamment en vue de la détection de freinage d'urgence, comprenant au moins un capteur (5) d'une grandeur relative à l'action de freinage du conducteur, **caractérisé par le fait qu'**il comprend un moyen de mesure du maximum de ladite grandeur pendant une durée déterminée Δ, une mémoire apte à stocker un nombre N de mesures du maximum correspondant à plusieurs freinages passés émises par ledit capteur, et un moyen de comparaison de la dernière mesure avec une valeur déterminée V selon la répartition des N mesures stockées en mémoire.

2. Système selon la revendication 1, **caractérisé par le fait que** la mémoire est de type premier entré/premier sorti.

3. Système selon la revendication 1 ou 2, **caractérisé par le fait que** la valeur déterminée V est définie par un percentile P de la répartition des N mesures.

4. Système selon l'une quelconque des revendications précédentes, **caractérisé par le fait qu'**il comprend un moyen d'assistance au freinage (4) en fonction du résultat de la comparaison de la dernière mesure avec la valeur déterminée V.

5. Système selon l'une quelconque des revendications précédentes, **caractérisé par le fait que** ladite grandeur est la vitesse maximale d'enfoncement de la pédale de frein.

6. Système selon la revendication 5, **caractérisé par le fait que** la durée déterminée Δ est comprise entre 200 et 300 millisecondes, préférablement entre 225 et 275 millisecondes, mieux encore égale à 250 millisecondes, le nombre N de mesures est compris entre 20 et 70, préférablement entre 30 et 50, et le percentile P de la répartition des N mesures est compris entre 85 et 95, préférablement entre 88 et 92, mieux encore égal à 91.

7. Système selon l'une quelconque des revendications précédentes, **caractérisé par le fait que** ladite grandeur est le gradient maximal d'effort sur la pédale de frein.

8. Système selon la revendication 7, **caractérisé par le fait que** la durée déterminée Δ est comprise entre 150 et 250 millisecondes, préférablement entre 175 et 225 millisecondes, mieux encore égale à 200 millisecondes, le nombre N de mesures est compris entre 20 et 70, préférablement entre 30 et 50, et le percentile P de la répartition des N mesures est compris entre 85 et 98, préférablement entre 91 et 96, mieux encore égal à 94,6.

9. Système selon l'une quelconque des revendications précédentes, **caractérisé par le fait que** ladite grandeur est le gradient maximal de pression dans le circuit hydraulique de freinage.

10. Système selon la revendication 9, **caractérisé par le fait que** la durée déterminée Δ est comprise entre 150 et 250 millisecondes, préférablement entre 175 et 225 millisecondes, mieux encore égale à 200 millisecondes, le nombre N de mesures est compris entre 20 et 70, préférablement entre 30 et 50, et le percentile P de la répartition des N mesures est compris entre 75 et 95, préférablement entre 80 et 90, mieux encore égal à 85,8.

## Claims

1. System for analysing the braking of a vehicle, in particular in order to detect an emergency braking action, comprising at least one sensor (5) sensing a quantity relating to the braking action of the driver, **characterized in that** it comprises a means for measuring the maximum of said quantity for a determined duration Δ, a memory capable of storing a number N of measurements of the maximum corresponding to a number of past braking actions emitted by said sensor, and a means for comparing the last measurement with a determined value V according to the distribution of the N measurements stored in memory.

2. System according to Claim 1, **characterized in that** the memory is of the first in/first out type.

3. System according to Claim 1 or 2, **characterized in that** the determined value V is defined by a percentile P of the distribution of the N measurements.

4. System according to any one of the preceding claims, **characterized in that** it comprises a braking assistance means (4) for assisting braking on the basis of the result of the comparison of the last measurement with the determined value V.

5. System according to any one of the preceding claims, **characterized in that** said quantity is the maximum speed of depression of the brake pedal.

6. System according to Claim 5, **characterized in that** the determined duration Δ is between 200 and 300 milliseconds, preferably between 225 and 275 milliseconds, even better equal to 250 milliseconds, the number N of measurements is between 20 and 70, preferably between 30 and 50, and the percentile P of the distribution of the N measurements is between 85 and 95, preferably between 88 and 92, even better equal to 91.

7. System according to any one of the preceding claims, **characterized in that** said quantity is the maximum gradient of force on the brake pedal.

8. System according to Claim 7, **characterized in that** the determined duration Δ is between 150 and 250 milliseconds, preferably between 175 and 225 milliseconds, even better equal to 200 milliseconds, the number N of measurements is between 20 and 70, preferably between 30 and 50, and the percentile P of the distribution of the N measurements is between 85 and 98, preferably between 91 and 96, even better equal to 94.6.

9. System according to any one of the preceding claims, **characterized in that** said quantity is the maximum gradient of pressure in the hydraulic braking circuit.

10. System according to Claim 9, **characterized in that** the determined duration Δ is between 150 and 250 milliseconds, preferably between 175 and 225 milliseconds, even better equal to 200 milliseconds, the number N of measurements is between 20 and 70, preferably between 30 and 50, and the percentile P of the distribution of the N measurements is between 75 and 95, preferably between 80 and 90, even better equal to 85.8.

## Patentansprüche

1. System zur Analyse des Bremsens eines Fahrzeugs, insbesondere zur Erfassung einer Notbremsung, das mindestens einen Sensor (5) für eine Größe bezüglich der Bremstätigkeit des Fahrers enthält, **dadurch gekennzeichnet, dass** es eine Einrichtung zur Messung des Maximums der Größe während einer bestimmten Dauer Δ, einen Speicher, der eine Anzahl N von vom Sensor gesendeten Messungen des Maximums entsprechend mehreren vergangenen Bremsvorgängen speichern kann, und eine Einrichtung zum Vergleich der letzten Messung mit einem bestimmten Wert V gemäß der Verteilung der gespeicherten N Messungen enthält.

2. System nach Anspruch 1, **dadurch gekennzeichnet, dass** der Speicher vom Typ FIFO ist.

3. System nach Anspruch 1 oder 2, **dadurch gekennzeichnet, dass** der bestimmte Wert V durch ein Perzentil P der Verteilung der N Messungen definiert wird.

4. System nach einem der vorhergehenden Ansprüche, **dadurch gekennzeichnet, dass** es eine Bremsassistent-Einrichtung (4) abhängig vom Ergebnis des Vergleichs der letzten Messung mit dem bestimmten Wert V enthält.

5. System nach einem der vorhergehenden Ansprüche, **dadurch gekennzeichnet, dass** die Größe die maximale Eindrückgeschwindigkeit des Bremspedals ist.

6. System nach Anspruch 5, **dadurch gekennzeichnet, dass** die bestimmte Dauer Δ zwischen 200 und 300 Millisekunden, vorzugsweise zwischen 225 und 275 Millisekunden liegt, noch besser gleich 250 Millisekunden ist, die Anzahl N von Messungen zwischen 20 und 70, vorzugsweise zwischen 30 und 50 liegt, und das Perzentil P der Verteilung der N Messungen zwischen 85 und 95, vorzugsweise zwischen 88 und 92 liegt, noch besser gleich 91 ist.

7. System nach einem der vorhergehenden Ansprüche, **dadurch gekennzeichnet, dass** die Größe der maximale Kraftgradient auf dem Bremspedal ist.

8. System nach Anspruch 7, **dadurch gekennzeichnet, dass** die bestimmte Dauer Δ zwischen 150 und 250 Millisekunden, vorzugsweise zwischen 175 und 225 Millisekunden liegt, noch besser gleich 200 Millisekunden ist, die Anzahl N von Messungen zwischen 20 und 70, vorzugsweise zwischen 30 und 50 liegt, und das Perzentil P der Verteilung der N Messungen zwischen 85 und 98, vorzugsweise zwischen 91 und 96 liegt, noch besser gleich 94,6 ist.

9. System nach einem der vorhergehenden Ansprüche, **dadurch gekennzeichnet, dass** die Größe der maximale Druckgradient im Hydraulikbremskreis ist.

10. System nach Anspruch 9, **dadurch gekennzeichnet, dass** die bestimmte Dauer Δ zwischen 150 und 250 Millisekunden, vorzugsweise zwischen 175 und 225 Millisekunden liegt, noch besser gleich 200 Millisekunden ist, die Anzahl N von Messungen zwischen 20 und 70, vorzugsweise zwischen 30 und 50 liegt, und das Perzentil P der Verteilung der N Messungen zwischen 75 und 95, vorzugsweise zwischen 80 und 90 liegt, noch besser gleich 85,8 ist.
